# EUROPÄISCHE PATENTSCHRIFT

(11) **EP 1 703 156 B1**
(45) Veröffentlichungstag und Bekanntmachung des Hinweises auf die Patenterteilung: **16.07.2008**
(21) Anmeldenummer: 06005471.5
(22) Anmeldetag: 17.03.2006
(51) Int. Cl.: F16D 1/04, F16B 7/04

(54) **Kupplung aus zwei verstellbaren Steckteilen**
Coupling with two adjustable insertable pieces
Accouplement avec deux pièces réglablees enfoncablees

(30) Priorität: 19.03.2005 DE 102005012790
(43) Veröffentlichungstag der Anmeldung: 20.09.2006
(73) Patentinhaber: SMS Demag AG, 40237 Düsseldorf (DE)
(72) Erfinder: Stavenow, Axel, 40625 Düsseldorf (DE); Weyer, Axel, 42349 Wuppertal (DE)
(74) Vertreter: Klüppel, Walter

(56) Entgegenhaltungen:
- EP-A- 1 486 273
- WO-A-02/101255
- DE-A1- 3 042 260
- US-A- 3 606 407

## Beschreibung

Die Erfindung betrifft eine Kupplung aus zwei verstellbaren Steckteilen für antriebsmäßig zu verbindende oder zu lösende, koaxial verlaufende Antriebselemente einer Stranggießvorrichtung für flüssige Metalle, insbesondere für flüssige Stahlwerkstoffe.

In den bezeichneten Stranggießmaschinen befindet sich eine Anzahl von Antrieben, die in heißen Zonen der Anlage, wie bspw. in der Nähe der Stranggießkokille arbeiten und zur Wartung, in Betriebsfällen und bei Schäden schnell ausgebaut und wieder eingebaut werden müssen. Verbindungen zwischen einer Antriebsstange und einer Abtriebsstange müssen ohne Hemmnisse, die durch die Hitze und Verschmutzung entstehen, gelöst und wieder verbunden werden. Wie sich gezeigt hat, sind handelsübliche Kupplungen nicht geeignet, diese Bedingungen zu erfüllen. In Fällen, in denen Axialkräfte mittels verschraubter Flansche oder mittels Gelenkkopf von der Antriebsstange auf die Abtriebsstange übertragen werden, ist erforderlich, im heißen Stranggießbetrieb zum Lösen der Antriebsstange von der Abtriebsstange Schraubverbindungen bzw. den Gelenkkopf zu lösen.

Eine solche Anwendungsstelle der Erfindung bei entsprechender Gestaltung der beiden axial verstellbaren Kupplungsteile ist in der DE-OS 26 53 126 beschrieben.

Dort sind zwei mit gleichen Verzahnungen versehene Steckteile zum Verstellen einer Schmalseitenwand einer Stranggießkokille auf konzentrischen Antriebswellen vorgesehen. Auf der beweglichen Seite ist eine Kupplungshälfte an einem Hubring gelenkig befestigt und der Hubring wird mittels einer Hubspindel betätigt, wobei diese Kupplungshälfte bewegt werden kann, währenddem die andere Kupplungshälfte feststeht. Die Verzahnung der beiden Kupplungshälften ist nicht weiter geschützt und gegenüber Schmutz, Wasser, Dämpfen und Gasen offen. Es ist nicht auszuschließen, dass dadurch eine Beeinträchtigung der Kupplungsbetätigung eintreten kann.

Der Erfindung liegt die Aufgabe zugrunde, auch bei Anordnung solcher Kupplungen im heißen und schmutzgefährdeten Bereich von Stranggießmaschinen, ein schnelles und sicheres Lösen oder Kuppeln der beiden Kupplungshälften leicht zu ermöglichen, so dass der Einfluss von Schmutz, Wasser, Dämpfen oder Gasen erheblich vermindert werden kann.

Die gestellte Aufgabe wird erfindungsgemäß dadurch gelöst, dass für eine axiale Verbindung zweier Antriebsabschnitte eines Antriebs für Schmalseitenwände einer Platten-Stranggießkokille der Breiten- und / oder Konizitätsverstellung, oder einer Verbindungswelle eines Spindeltriebs mit Verzweigungsgetriebe, oder von Gelenkköpfen eines hydraulischen Kolben-Zylinder-Antriebs ein erster Steckteil mit sternförmigen Auslegern und ein zweiter Steckteil mit korrespondierenden passenden Ausnehmungen versehen ist, dass auf dem ersten Steckteil ein radial drehbarer zweiteiliger Ring und an dem zweiten Steckteil eine ringförmige Nut ausgebildet ist und dass der zweiteilige Ring in gekuppelter Position die Steckteile über Formschluss verdrehsicher fixiert. Dadurch können beide Steckteile trotz Schmutz, Wasser, Gasen oder Dämpfen auf lange Zeit funktionssicher gehalten werden und die Verriegelung kann schnell geschlossen oder geöffnet werden. Der Zutritt von Schmutz, Wasser, Gasen oder Dämpfen wird weitgehend verhindert und die Kupplungsstelle an der entscheidenden Stelle von außen nach innen verlegt. Die schädlichen Stoffe können sehr viel schwieriger nach innen dringen und selbst bei Ablagerungen werden diese Stoffe nicht an den Kupplungsflächen abgelagert. Ein wesentlicher Vorteil liegt in der schnellen und sicheren Ver- oder Entriegelung der Kupplung beim Verbinden oder Lösen einer Antriebseinheit in Stranggießmaschinen. Hierdurch wird eine Reduzierung der Wechselzeiten von Baugruppen in der Stranggießvorrich-tung erreicht.

Eine sehr kurze Betätigungszeit kann nach einer Ausgestaltung dadurch erzielt werden, dass der zweiteilige Ring in sich gegenüberliegenden Ausdrehungen durch eine Umdrehung von 30° bis 90° die Verdrehsicherung bildet.

Die Länge der für die Sicherung notwendigen Drehbewegung wird nach einer anderen Ausgestaltung dadurch erzielt, dass der Verdrehwinkel des zweiteiligen Ringes mittels beidseitig am Ende des Drehweges angeordnete Stifte begrenzt ist.

Eine andere Verbesserung besteht darin, dass der geteilte Ring bei ineinandergesteckten Steckteilen in der Nut des ersten Steckteils und in der Ausdrehung des zweiten Steckteils hälftig eingefügt und in der verriegelten Position mittels eines Stiftes mit Schraube fixiert ist. Dadurch kann die Betriebsstellung schnell und zuverlässig festgelegt oder gelöst und dauerhaft erhalten werden.

Das Lösen oder Verriegeln des zweiteiligen Ringes kann nach einer anderen Fortbildung dadurch leichter gehandhabt werden, indem auf den zweiteiligen Ring ein Ringband axial über den Schaft aufschiebbar ist, durch das ein Arretierstift in eine Bohrung des jeweiligen backenförmigen Auslegers in der Verriegelungsposition geführt ist.

Dabei dient zur leichteren Handhabung, dass ein Handhebel oder ein radial mittels Streben beabstandetes Handrad vorgesehen ist, wobei der Arretierstift durch das Ringband verlaufend im Verriegelungszustand jeweils in einen backenförmigen Ausleger eingreift.

In der Zeichnung sind Ausführungsbeispiele der Erfindung dargestellt, die nachstehend näher beschrieben werden.

Es zeigen:
- Figur 1: eine perspektivische Ansicht der beiden Steckteile in Explosiv-Darstellung
- Figur 1A: eine Einzelheit eines geteilten Ringes zur Verbindung der beiden Steckteile,
- Figur 2: eine perspektivische Ansicht der Steckteile während des Steck- und des Verriegelungsvorgangs,
- Figur 3: ebenfalls perspektivisch die beiden Steckteile in verriegelter Position,
- Figur 4: stellt einen ebenen radialen Schnitt A-B gemäß Fig. 5 dar, wobei in
- Figur 5: der axiale Schnitt gezeigt ist,
- Figur 6: zeigt perspektivisch ein zweites Ausführungsbeispiel mit einem zentrischen Dorn und nur zwei Auslegern des ersten Steckteils und entsprechenden Ausnehmungen im zweiten Steckteil,
- Figur 7: zeigt perspektivisch den Fig. 2 entsprechenden Steckzustand der beiden Steckteile,
- Figur 8: zeigt perspektivisch den Fig. 3 entsprechenden zusammengebauten und fixierten Zustand und
- Figur 9: einen senkrechten Schnitt durch eine Seite eines Segmentrahmens einer Stranggießvorrichtung.

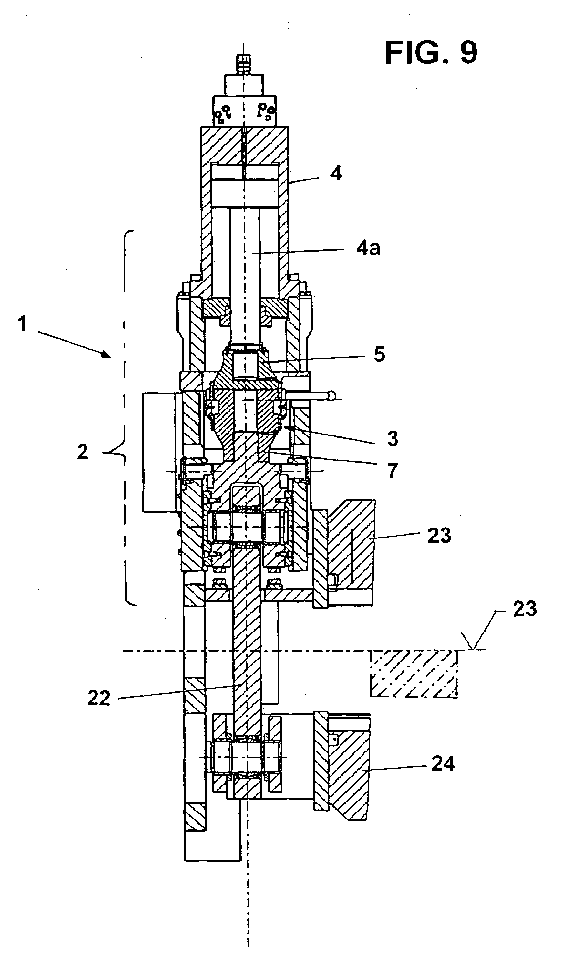

Die gezeigte Kupplung wird in Stranggießvorrichtungen 1 für eine axiale Verbindung zweier Antriebsabschnitte 2, bspw. für Schmalseitenwände einer Platten-Stranggieß-kokille der Breiten- und / oder Konizitätsverstellung oder an einer Verbindungswelle eines Spindeltriebs mit Verzweigungsgetriebe oder, wie in Fig. 9 gezeigt ist, an Gelenkköpfen 3 eines hydraulischen Kolben-Zylinder-Antriebs 4 eingesetzt. Die Kupplung überträgt nur axiale Kräfte und ist nicht für Torsionskräfte vorgesehen.

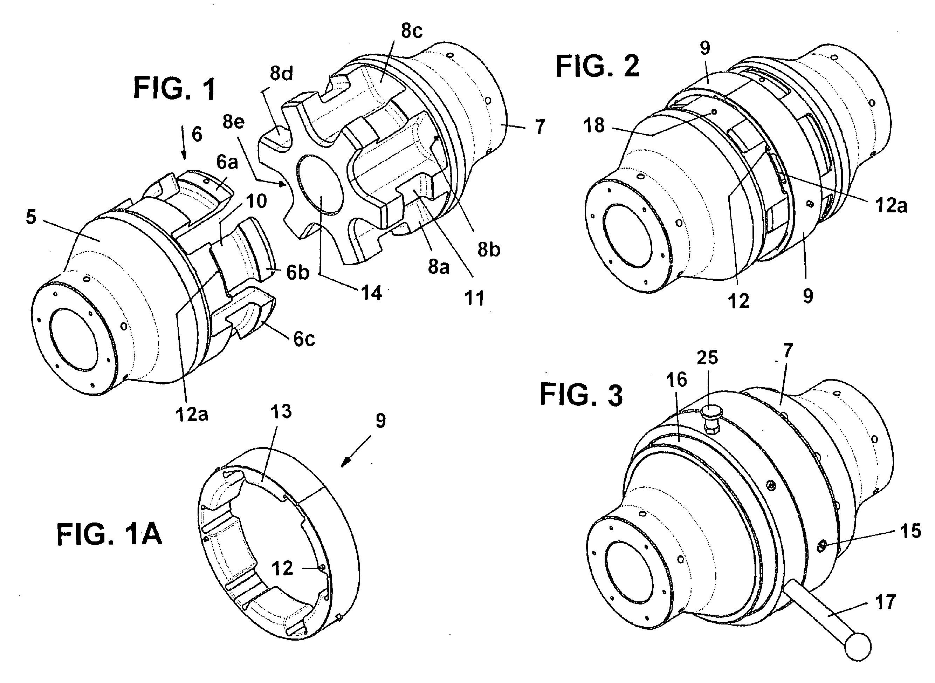

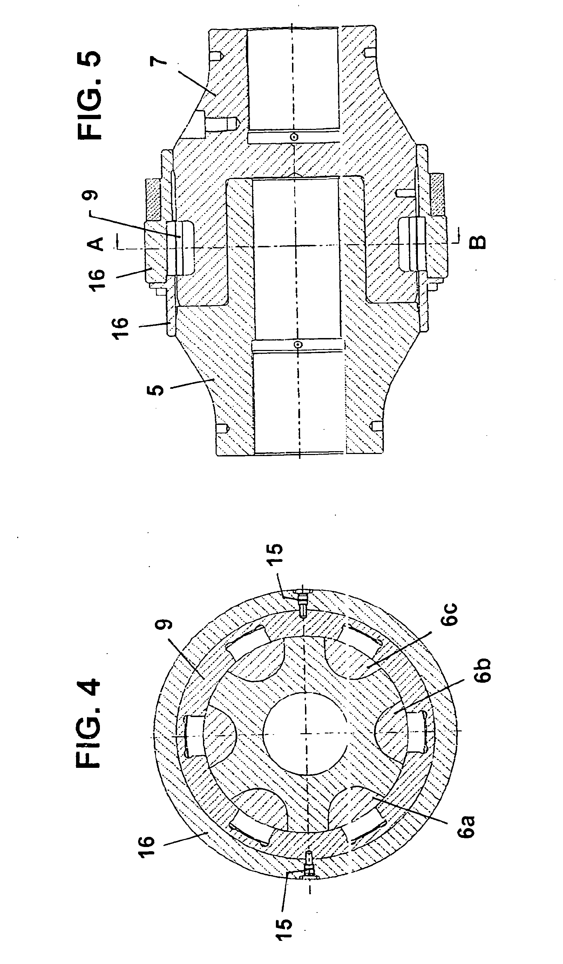

In Fig. 1 ist von der Kupplung ein erster Steckteil 5 (links) in zerlegter Darstellung vor einem zweiten Steckteil 7 (rechts) gezeigt. Der erste Steckteil 5 besitzt eine Gruppe von sternförmigen Auslegern 6, von denen zwei, drei, vier, fünf oder mehr Ausleger 6a, 6b, 6c usw. gezeigt sind. Im Ausführungsbeispiel sind sechs Ausleger 6 ausgeführt. Der zweite Steckteil 7 besitzt zu den Auslegern 6a, 6b, 6c ... korrespondierende Ausnehmungen 8a, 8b ... 8e am Außenumfang des Absatzes eines Schaftes und so dass die Ausleger 6 bei Heranfahren in die korrespondierenden Ausnehmungen 8a, 8b, ... ineinandergleiten können. In dem verlängerten Schaft des ersten Steckteils 5 ist für einen zweiteiligen Ring 9 eine Nut 10 vorgesehen, der für sich in Fig. 1A gezeigt ist. In dem Schaft des zweiten Steckteils 7 ist eine Ausdrehung 11 vorgesehen, die im gesteckten Zustand des ersten und des zweiten Steckteils 5, 7 einen durchgehenden Raum für den zweigeteilten Ring 9 bildet, wie in den Fig. 4 und 5 in einem ebenen Schnitt deutlich zu sehen ist.

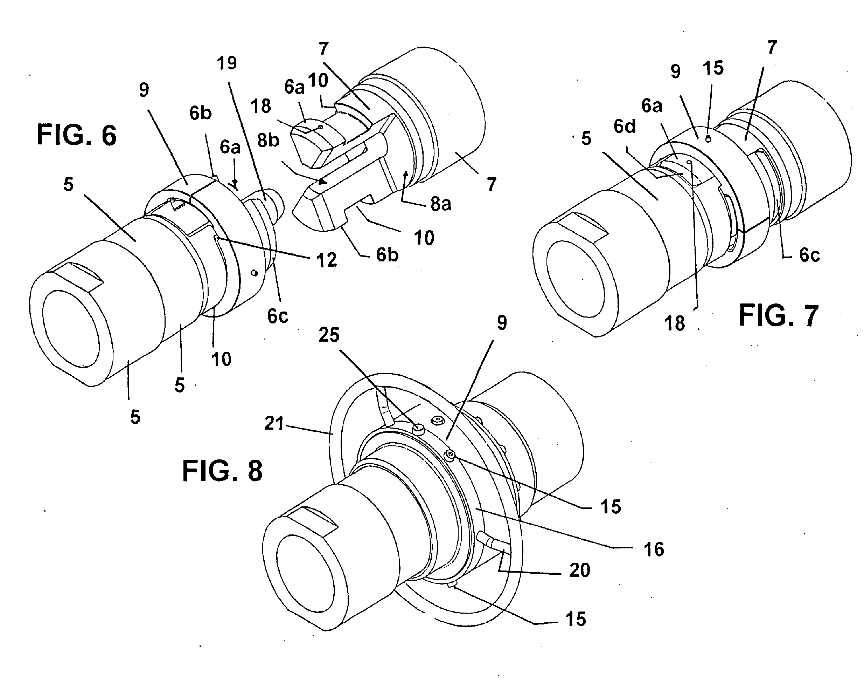

In Fig. 2 werden die Steckteile 5, 7 vollends ineinandergesteckt, so dass die vorderen Enden der sternförmigen Ausleger 6 an das Ende der korrespondierenden Ausnehmungen 8a, 8b, 8c ... anliegen. Nach der Montage des zweiteiligen Ringes 9 und nach dessen Verdrehen um 30° bis 90° ist der Zustand erreicht, dass der Stift 12 am Ende einer Aussparung 12a anschlägt, wodurch auch das in die Nute 10 passende Gegenstück 13, vgl. Fig. 4, in die Verriegelungslage gelangt. Der Zusammenbau und die Verriegelung sind wie zu den Fig. 1 bis 3 beschrieben übereinstimmend mit der Ausführungsform der Fig. 6 und 7.

Die Fixierung und die Sicherung der Steckteile 5 und 7 und des geteilten Ringes 9 wird gemäß den Fig. 3 und 8 (in Fig. 4 in dem ebenen Schnitt zu sehen) durch ein über dem geteilten Ring 9 liegendes Ringband 16 und teils in dem Ringband 16 und teils in dem geteilten Ring 9 gesteckten Stiften mit Schraube 15 gewährleistet. Die Lage eines Handhebels 17 wird durch einen Arretierstift 25 fixiert.

Die Ausführungsform der Fig. 6 bis 8 weicht durch die Anzahl der Ausleger 6a, 6b (zwei Ausleger) und einen frei vorstehenden Dorn 19 im ersten Steckteil 5 ab, der in eine Kernbohrung 14 des zweiten Steckteils 7 zentrierend eingeführt wird. Die Ausführungsformen der Fig. 1 bis 3 und der Fig. 6 bis 8 sind im Prinzip gleichwertig.

Gemäß den Fig. 3 und 8 werden die Handhabung und die Betätigung im Betrieb dadurch erleichtert, dass auf den zweiteiligen Ring 9 das Ringband 16 axial über den Schaft aufgeschoben wird, durch das die Stifte 15 in Bohrungen 18 der backenartigen Ausleger 6a, 6b (6c ...) in der Verriegelungs-Position hineinragen. Ferner ist der an dem Ringband 16 angreifende, radial verlaufende Handhebel 17 vorgesehen oder ein mittels Streben 20 beabstandetes Handrad 21 vergrößerten Durchmessers. Das Ringband 16 ist auch hier mittels des Arretierstiftes 25 fixiert.

In Fig. 9 ist die eingangs erwähnte Anwendung der Kupplung an den Stützrollengerüsten einer Stranggießvorrichtung gezeigt. Dabei ist eine Verbindung der Segmentrahmen 23 der Festseite und der Segmentrahmen 24 der Losseite des Stützrollengerüstes jeweils mittels Lenkerstangen 22 vorgenommen. Das Gelenk zwischen einem hydraulischen Kolben-Zylinder-Antrieb 4, d.h. dessen Kolbenstange 4a erfolgt über die beschriebene Kupplung, die aus dem ersten Steckteil 5 und dem zweiten Steckteil 7 gebildet ist, wie beschrieben. Dadurch ist diese Verbindung leicht und schnell lösbar.

Bezugszeichenliste
- 1: Stranggießvorrichtung
- 2: Antriebsabschnitt
- 3: Gelenkkopf
- 4: hydraulischer Kolben-Zylinder-Antrieb
- 4a: Kolbenstange
- 5: erster Steckteil
- 6: sternförmiger Ausleger
- 6a: Ausleger
- 6b: Ausleger
- 6c: Ausleger
- 7: zweiter Steckteil
- 8a: korrespondierende Ausnehmung
- 8b: korrespondierende Ausnehmung
- 8c: korrespondierende Ausnehmung
- 8d: korrespondierende Ausnehmung
- 8e: korrespondierende Ausnehmung
- 9: zweiteiliger Ring
- 10: Nute
- 11: Ausdrehung im zweiten Steckteil (7)
- 12: am Ende des Drehwegs angeordneter Stift
- 12a: Aussparung
- 13: in Nute (10) passendes Gegenstück
- 14: Kernbohrung
- 15: Stift mit Schraube
- 16: Ringband
- 17: Handhebel
- 18: Bohrung
- 19: frei vorstehender Dorn
- 20: Strebe
- 21: Handrad
- 22: Lenkerstange
- 23: Segmentrahmen, Festseite
- 24: Segmentrahmen, Losseite
- 25: Arretierstift

## Patentansprüche

1. Kupplung aus zwei verstellbaren Steckteilen (5; 7) für antriebsmäßig zu verbindende oder zu lösende, koaxial verlaufende Antriebsabschnitte (2) einer Stranggießvorrichtung (1) für flüssige Metalle, insbesondere für flüssige Stahlwerkstoffe,
**dadurch gekennzeichnet,**
**dass** für eine axiale Verbindung zweier Antriebsabschnitte (2) eines Antriebs für Schmalseitenwände einer Platten-Stranggießkokille der Breiten- und / oder Konizitätsverstellung, oder einer Verbindungswelle eines Spindeltriebs mit Verzweigungsgetriebe, oder von Gelenkköpfen (3) eines hydraulischen Kolben-Zylinder-Antriebs (4) ein erster Steckteil (5) mit sternförmigen Auslegern (6) und ein zweiter Steckteil (7) mit korrespondierend passenden Ausnehmungen (8a, 8b, 8c usw.) versehen ist, dass auf dem ersten Steckteil (5) ein radial drehbarer zweiteiliger Ring (9) und an dem zweiten Steckteil (7) eine ringförmige Nut (10) ausgebildet ist und dass der zweiteilige Ring (9) in gekuppelter Position die Steckteile (5; 7) über Formschluss verdrehsicher fixiert.

2. Kupplung nach Anspruch 1,
**dadurch gekennzeichnet,**
**dass** der zweiteilige Ring (9) in sich gegenüberliegenden Ausdrehungen (10; 11) durch eine Umdrehung von 30° bis 90° die Verdrehsicherung bildet.

3. Kupplung nach den Ansprüchen 1 und 2,
**dadurch gekennzeichnet,**
**dass** der Verdrehwinkel des zweiteiligen Rings (9) mittels beidseitig am Ende des Drehweges angeordnete Stifte (12) begrenzt ist.

4. Kupplung nach einem der Ansprüche 1 bis 3,
**dadurch gekennzeichnet,**
**dass** der geteilte Ring (9) bei ineinandergesteckten Steckteilen (5 und 7) in der Nut (10) des ersten Steckteils (5) und in der Ausdrehung (11) des zweiten Steckteils (7) hälftig eingefügt und in der verriegelten Position mittels eines Stiftes mit Schraube (15) fixiert ist.

5. Kupplung nach einem der Ansprüche 1 bis 4,
**dadurch gekennzeichnet,**
**dass** auf den zweiteiligen Ring (9) ein Ringband (16) axial über den Schaft aufschiebbar ist, durch das ein Arretierstift (25) in eine Bohrung (18) des jeweiligen backenförmigen Auslegers (6a; 6b; 6c ...) in der Verriegelungsposition geführt ist.

6. Kupplung nach Anspruch 5,
**dadurch gekennzeichnet,**
**dass** ein Handhebel (17) oder ein radial mittels Streben (20) beabstandetes Handrad (21) vorgesehen ist, wobei der Arretierstift (25) durch das Ringband (16) verlaufend im Verriegelungszustand jeweils in einen backenförmigen Ausleger (6a; 6b; 6c ...) eingreift.

7. Kupplung nach Anspruch 1,
**dadurch gekennzeichnet,**
**dass** der erste Steckteil (5) mittels eines frei vorstehenden Dornes (19) in einer Kernbohrung (14) des zweiten Steckteils (7) zum Einführen zentriert ist.

## Claims

1. Coupling consisting of two adjustable plug parts (5; 7) for coaxially extending drive sections (2), which are to be connected or detached in terms of drive, of a continuous casting device (1) for liquid metals, particularly for liquid steel materials, **characterised in that** a first plug part (5) with star-shaped arms (6) and a second plug part (7) with correspondingly adapted recesses (8a, 8b, 8c, etc.) are provided for an axial connection of two drive sections (2) of a drive for narrow side walls of a plate continuous casting mould of the width adjustment and/or conicity adjustment or a connecting shaft of a spindle drive with branching transmissions or of universal joint heads (3) of a hydraulic piston-cylinder drive (4), that a radial rotatable two-part ring (9) is formed on the first plug part (5) and an annular groove (10) on the second plug part (7) and that the two-part ring (9) in coupled position fixes the plug parts (5; 7) by way of mechanically positive connection to be secure against relative rotation.

2. Coupling according to claim 1, **characterised in that** the two-part ring (9) forms, in mutually opposite turned cavities (10; 11), the securing against relative rotation by a rotational movement of 30° to 90°.

3. Coupling according to claims 1 and 2, **characterised in that** the rotational angle of the two-part ring (9) is limited by means of pins (12) arranged at both sides at the end of the rotary path.

4. Coupling according to any one of claims 1 to 3, **characterised in that** the divided ring (9) is, when the plug parts (5 and 7) are plugged into one another, half inserted into the groove (10) of the first plug part (5) and into the turned cavity (11) of the second plug part (7) and is fixed in the locked position by means of a pin with a screw (15).

5. Coupling according to any one of claims 1 to 4, **characterised in that** on the two-part ring (9) an annular band (16) can be axially pushed over the shank, by way of which a locking pin (25) is guided into the locking position in a bore (18) of the respective jaw-shaped arm (6a; 6b; 6c ...).

6. Coupling according to claim 5, **characterised in that** a hand lever (17) or a hand wheel (21), which is radially spaced by means of struts (20), is provided, wherein the locking pin (25) engages through the annular band (16) to extend in locking state each time into a jaw-shaped arm (6a; 6b; 6c ...).

7. Coupling according to claim 1, **characterised in that** the first plug part (5) is, for the introduction, centred by means of a freely protruding mandrel (19) in a core bore (14) of the second plug part (7).

## Revendications

1. Accouplement consistant dans deux éléments enfichables (5 ; 7) pour des tronçons d'entraînement (2) à solidariser ou à désolidariser par entraînement d'un dispositif de coulée continue (1) pour métaux liquides, notamment pour des matières d'aciérie,
**caractérisé en ce que**,
pour un assemblage axial de deux tronçons d'entraînement (2) d'un entraînement pour des parois de côté étroit d'une lingotière à plaques pour la coulée continue du réglage de la largeur et/ou de la conicité, ou d'un arbre d'assemblage d'une commande de broche à vis avec transmission d'embranchement ou de têtes d'articulation (3) d'un entraînement hydraulique par piston/cylindre (4), un premier élément enfichable (5) est muni de bras en forme d'étoile (6) et un deuxième élément enfichable (7) est muni d'évidements ajustés en correspondance (8a, 8b, 8c etc.), **en ce que** sur le premier élément enfichable (5) est conçue une bague en deux éléments (9) rotative en direction radiale et sur le deuxième élément enfichable (7) est conçue une rainure annulaire (10) et **en ce que**, dans la position accouplée, la bague en deux éléments (9) fixe par complémentarité de forme les éléments enfichables (5 ; 7) de façon anti-rotative.

2. Accouplement selon la revendication 1,
**caractérisé en ce que**,
la bague en deux éléments (9) forme dans deux alésages opposés (10 ; 11) la résistance à la torsion par une rotation de 30° à 90°.

3. Accouplement selon les revendications 1 et 2,
**caractérisé en ce que**,
l'angle de torsion de la bague en deux éléments (9) est limité par des tiges (12) disposées de part et d'autre de la course de rotation.

4. Accouplement selon l'une quelconque des revendications 1 à 3,
**caractérisé en ce que**,
lorsque les éléments enfichables (5 et 7) sont enfichés dans la rainure (10) du premier élément enfichable (5) et dans l'alésage (11) du deuxième élément enfichable (7), la bague en deux éléments (9) est insérée de moitié et est fixée en position verrouillée au moyen d'une tige avec vis (15).

5. Accouplement selon l'une quelconque des revendications 1 à 4,
**caractérisé en ce que**,
sur la bague en deux éléments (9), une bande annulaire (16), par laquelle une tige de blocage (25) est guidée dans la position de verrouillage dans un perçage (18) du bras respectif en forme de mâchoire (6a; 6b; 6c ...) est susceptible d'être poussée en direction axiale sur le fût.

6. Accouplement selon la revendication 5,
**caractérisé en ce que**,
il est prévu un levier manuel (17) ou un volant (21) écarté en direction radiale par des entretoises (20), en position de verrouillage, la tige de blocage (25) s'engageant en s'étendant à travers la bande annulaire (16) dans un bras en forme de mâchoire (6a; 6b; 6c ...).

7. Accouplement selon la revendication 1,
**caractérisé en ce que**,
le premier élément enfichable (5) est centré pour l'introduction au moyen d'un tourillon saillant (19) dans un avant-trou (14) du deuxième élément enfichable (7).
